# EUROPEAN PATENT APPLICATION

(11) **EP 4 790 912 A1**
(43) Date of publication of application: **12.08.2026**
(21) Application number: 26156716.8
(22) Date of filing: 05.02.2026
(51) Int. Cl.: H04B 7/0456, H04B 7/06, H04W 52/24

(54) **DATA-DRIVEN BEAMFORMING TECHNIQUES FOR SPECTRUM SHARING**

(30) Priority: 10.02.2025 FI 20255111
(71) Applicant: Nokia Solutions and Networks Oy, 02610 Espoo (FI)
(72) Inventor: SOHRABI, Foad, Morristown (US); KOTESHWAR SRINATH, Pavan, Orsay (FR); VENKATESAN, Sivarama, West Orange (US); HATHIRAMANI, Navin, Coppell (US); UZEDA GARCIA, Luis Guilherme, Massy (FR)
(74) Representative: Nokia EPO representatives

(57) **Abstract**

A network device is configured to obtain an interference constraint defined for an operational area of at least one device providing service to be protected from interference caused by at least one base station serving one or more user devices, a data set of channel samples associated with the operational area of the at least one device, and a data set of channel samples associated with the one or more user devices in a serving area of the at least one base station. Based on the obtained information, the network device is configured to determine, with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area.

## Description

### TECHNICAL FIELD

Various example embodiments generally relate to the field of communication technologies. Some example embodiments relate to data-driven beamforming techniques, for example, for spectrum sharing.

### BACKGROUND

Deployment of mobile communications in new frequency bands creates a need for careful consideration of co-existence with other networks, such as satellite systems operating in the same frequency range. This highlights a growing need for advanced spectrum sharing technologies and regulatory frameworks to ensure efficient and reliable operation of diverse wireless services.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to control a level of interference with beamforming techniques. This enables that the level of interference may be limited, for example, for incumbent services which may be located within a certain region. This and other benefits may be achieved by the features of the independent claims. Further example embodiments are provided in the dependent claims, the description, and the drawings.

According to a first aspect, a network device is disclosed. The network device may comprise: at least one processor; and at least one memory storing instructions that, when executed by the at least one processor, cause the network device at least to: obtain an interference constraint defined for an operational area of at least one device providing service to be protected from interference caused by at least one base station serving one or more user devices; obtain a data set of channel samples associated with the operational area of the at least one device; obtain a data set of channel samples associated with the one or more user devices in a serving area of the at least one base station; determine, with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area.

According to an example embodiment of the first aspect, the network device may be a controller for spectrum sharing, and the instructions, when executed by the at least one processor, cause the network device to transmit the at least one parameter to the at least one base station for the beamforming.

According to an example embodiment of the first aspect, the network device may comprise one of the at least one base station, and the instructions, when executed by the at least one processor, cause the network device to: perform transmissions towards the one or more user devices served by the respective base station using the determined at least one parameter for beamforming.

According to an example embodiment of the first aspect, the at least one parameter comprises at least one of a precoder or a beamforming codebook.

According to an example embodiment of the first aspect, the data set of the channel samples associated with the operational area is obtained based on at least one of: channel model estimation, a historical data set or real-time measurements.

According to an example embodiment of the first aspect, the instructions, when executed by the at least one processor, cause the network device to: generate, by the neural network based on the channel samples associated with the one or more user devices, a precoder; input the precoder to a normalization layer of the neural network configured to adjust the precoder to meet a maximum transmit power constraint; perform, by the neural network based on the channel samples associated with the operational area, a scaling operation for the precoder, wherein precoder power is scaled down such that the interference constraint is met for the channel samples associated with the operational area; output, by the neural network, the precoder after the scaling operation; and determine the at least one parameter for beamforming based on the output.

According to an example embodiment of the first aspect, the instructions, when executed by the at least one processor, cause the network device to: determine, based on the output of the neural network, updated parameters for the precoder to minimize a loss function defined to maximize the at least one key performance indicator for the channel samples of the one or more user devices; and train the neural network based on the updated parameters.

According to an example embodiment of the first aspect, the instructions, when executed by the at least one processor, cause the network device to: obtain, by the neural network, a codebook for beamforming; input the codebook to a normalization layer of the neural network configured to adjust the codebook to meet a maximum transmit power constraint; perform, by the neural network based on the channel samples associated with the operational area, a scaling operation for the codebook, wherein codeword powers are scaled down such that the interference constraint is met for the channel samples associated with the operational area; output, by the neural network, the codebook with the scaled power; select, based on the output codebook and the channel samples associated with the one or more user devices, an optimal codeword that maximizes the at least one key performance indicator; and determine the at least one beamforming parameter based on the optimal codeword.

According to an example embodiment of the first aspect, the instructions, when executed by the at least one processor, further cause the network device to: determine, based on the output of the neural network, updated parameters for the codebook to minimize a loss function defined to maximize the at least one key performance indicator for the channel samples of the one or more user devices; and train the neural network based on the updated parameters.

According to an example embodiment of the first aspect, the instructions, when executed by the at least one processor, further cause the network device to: obtain parameters for a codebook; input the parameters to the neural network configured to output the codebook created based on the parameters; determine, based on the obtained data sets, updated parameters for the created codebook to minimize a loss function defined to maximize the at least one key performance indicator for the channel samples associated with the one or more user devices while the interference constraint is met for the channel samples associated with the operational area; train the neural network based on the updated parameters until a stopping criterion is met; and determine the at least one beamforming parameter based on the final codebook after training.

According to an example embodiment of the first aspect, the parameters trained based on the loss function comprise at least one of a matrix defining a direction of the beamforming or a vector defining scaling for each column of the codebook.

According to an example embodiment of the first aspect, the at least one key performance indicator comprises at least one of a data rate, a coverage, a spectral efficiency, geographical availability or a signal-to-noise-ratio.

According to an example embodiment of the first aspect, the operational area is associated with at least one of microwave links, satellites, radars, or airborne missions to be protected from interference.

According to an example embodiment of the first aspect, the instructions, when executed by the at least one processor, further cause the network device to: obtain a minimum power constraint; determine that transmit power of at least beam associated with the at least one beamforming parameter is below the minimum power constraint; instruct the at least one base station to turn off the at least one beam.

According to an example embodiment of the first aspect, the instructions, when executed by the at least one processor, cause the network device to: determine, based on the at least one parameter to be used in beamforming, separate codebooks for control and data transmission.

According to an example embodiment of the first aspect, the instructions, when executed by the at least one processor, cause the network device to: determine, based on the at least one parameter to be used in beamforming, that a feasible codebook for data transmission is not available; and transmit, to the one or more user devices, a stand-by signal indicative that a data part of transmissions is temporary unavailable.

According to a second aspect, a method is disclosed. The method may comprise: obtaining, by a network device, an interference constraint defined for an operational area of at least one device providing service to be protected from interference caused by at least one base station serving one or more user devices; obtaining, by the network device, a data set of channel samples associated with the operational area of the at least one device; obtaining, by the network device, a data set of channel samples associated with the one or more user devices in a serving area of the at least one base station; determining, by the network device with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area.

According to an example embodiment of the second aspect, the network device may be a controller for spectrum sharing, and the method further comprises: transmitting, by the network device, the at least one parameter to the at least one base station for the beamforming.

According to an example embodiment of the second aspect, the network device may comprise one of the at least one base station, and the method further comprises: performing, by the network device, transmissions towards the one or more user devices served by the respective base station using the determined at least one parameter for beamforming.

According to an example embodiment of the second aspect, the at least one parameter comprises at least one of a precoder or a beamforming codebook.

According to an example embodiment of the second aspect, the data set of the channel samples associated with the operational area is obtained based on at least one of: channel model estimation, a historical data set or real-time measurements.

According to an example embodiment of the second aspect, the method comprises: generating, by the neural network based on the channel samples associated with the one or more user devices, a precoder; inputting the precoder to a normalization layer of the neural network configured to adjust the precoder to meet a maximum transmit power constraint; performing, by the neural network based on the channel samples associated with the operational area, a scaling operation for the precoder, wherein precoder power is scaled down such that the interference constraint is met for the channel samples associated with the operational area; outputting, by the neural network, the precoder after the scaling operation; and determining the at least one parameter for beamforming based on the output.

According to an example embodiment of the second aspect, the method comprises: determining, by the network device based on the output of the neural network, updated parameters for the precoder to minimize a loss function defined to maximize the at least one key performance indicator for the channel samples of the one or more user devices; and training, by the network device, the neural network based on the updated parameters.

According to an example embodiment of the second aspect, the method comprises: obtaining, by the neural network, a codebook for beamforming; inputting the codebook to a normalization layer of the neural network configured to adjust the codebook to meet a maximum transmit power constraint; performing, by the neural network based on the channel samples associated with the operational area, a scaling operation for the codebook, wherein codeword powers are scaled down such that the interference constraint is met for the channel samples associated with the operational area; outputting, by the neural network, the codebook with the scaled power; selecting, by the network device, based on the output codebook and the channel samples associated with the one or more user devices, an optimal codeword that maximizes the at least one key performance indicator; and determining the at least one beamforming parameter based on the optimal codeword.

According to an example embodiment of the second aspect, the method comprises: determining, by the network device based on the output of the neural network, updated parameters for the codebook to minimize a loss function defined to maximize the at least one key performance indicator for the channel samples of the one or more user devices; and training, by the network device, the neural network based on the updated parameters.

According to an example embodiment of the second aspect, the method comprises: obtaining, by the network device, parameters for a codebook; inputting the parameters to the neural network configured to output the codebook created based on the parameters; determining, based on the obtained data sets, updated parameters for the created codebook to minimize a loss function defined to maximize the at least one key performance indicator for the channel samples associated with the one or more user devices while the interference constraint is met for the channel samples associated with the operational area; training, by the network device, the neural network based on the updated parameters until a stopping criterion is met; and determining the at least one beamforming parameter based on the final codebook after training.

According to an example embodiment of the second aspect, the parameters trained based on the loss function comprise at least one of a matrix defining a direction of the beamforming or a vector defining scaling for each column of the codebook.

According to an example embodiment of the second aspect, the at least one key performance indicator comprises at least one of a data rate, a coverage, a spectral efficiency, geographical availability or a signal-to-noise-ratio.

According to an example embodiment of the second aspect, the operational area is associated with at least one of microwave links, satellites, radars, or airborne missions to be protected from interference.

According to an example embodiment of the second aspect, the method comprises: obtaining, by the network device, a minimum power constraint; determining, by the network device, that transmit power of at least beam associated with the at least one beamforming parameter is below the minimum power constraint; and instructing, by the network device, the at least one base station to turn off the at least one beam.

According to an example embodiment of the second aspect, the method comprises: determining, by the network device based on the at least one parameter to be used in beamforming, separate codebooks for control and data transmission.

According to an example embodiment of the second aspect, the method comprises: determining, by the network device based on the at least one parameter to be used in beamforming, that a feasible codebook for data transmission is not available; and transmit, by the network device to the one or more user devices, a stand-by signal indicative that a data part of transmissions is temporary unavailable.

According to a third aspect, an apparatus is disclosed. The apparatus may comprise: at least one processor; and at least one memory storing instructions that, when executed by the at least one processor, cause the apparatus at least to perform the method according to the second aspect, or any example embodiment(s) thereof, as provided in the description and/or the claims.

According to a fourth aspect, an apparatus is disclosed. The apparatus may comprise means for performing the method according to the second aspect, or any example embodiment(s) thereof, as provided in the description and/or the claims.

According to a fifth aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the second aspect, or any example embodiment(s) thereof, as provided in the description and/or the claims.

Example embodiments of the present disclosure can thus provide apparatuses, methods, computer programs, computer program products, or computer readable media for improving various aspects of beamforming and interference control. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mobile network interfering with an operational area of an incumbent service;
FIG. 2 illustrates an example of an apparatus configured to practice one or more example embodiments;
FIG. 3 illustrates an example of a method for designing a codebook-free beamforming technique for spectrum sharing according to an example embodiment;
FIG. 4 illustrates an example of a method for designing a codebook-based beamforming for spectrum sharing according to an example embodiment;
FIG. 5 illustrates another example of a method for designing a codebook-based beamforming for spectrum sharing according to an example embodiment;
FIG. 6 illustrates an example simulation setup for spectrum sharing;
FIG. 7 illustrates an example of performance of different beamforming techniques for spectrum sharing;
FIG. 8 illustrates an example of a method for designing beamforming according to an example embodiment;
FIG. 9 illustrates an example of signaling for spectrum sharing using a data-driven beamforming technique according to one or more example embodiments; and
FIG. 10 illustrates an example of signaling for spectrum sharing when spectrum controller determines codebooks to be used by a base station according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

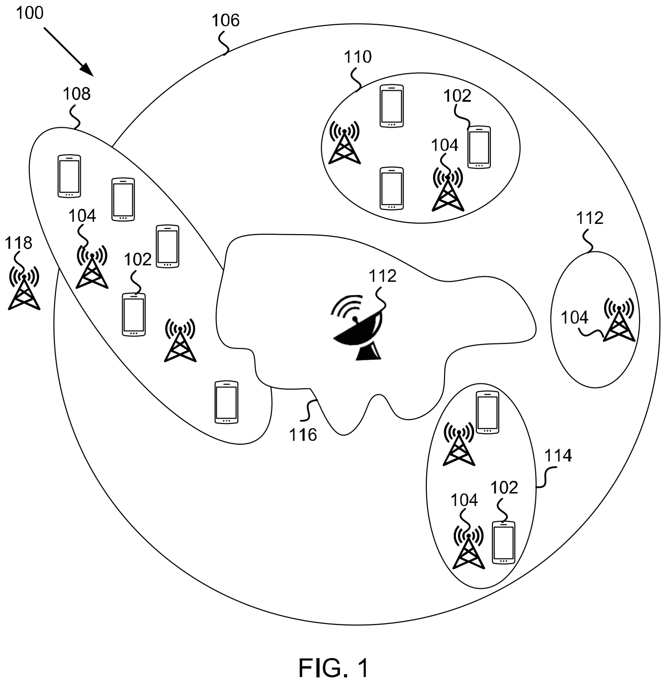

FIG. 1 illustrates an example of a mobile network interfering with an operational area of an incumbent service. The mobile network 100 may comprise one or more base stations 104, 118. The base station(s) 104, 118 may be part of a radio access network (RAN) configured to enable a device, represented throughout the description by UE 102, to access communication services provided by a core network (not shown). In connection with mobile network 100, base station(s) 104, 118 and core network may be collectively referred to as the 'network'. Mobile network 100 may be also referred to as a communication network, a wireless network or a cellular network. The UE 102 may comprise a user device, a terminal apparatus, a terminal device, a mobile device, or the like. The UE 102 may be configured to communicate with base station(s) 104, 118 over a radio interface, which may be also referred to as an air interface. Base stations 104, 118 may be also referred to as network devices or access nodes. A terminal device may comprise a device to which a connection from a communication network is terminated.

The radio interface may be configured for example based on the 5G NR (New Radio) standard defined by the 3^{rd} Generation Partnership Project (3GPP), or any future standard or technology (e.g., 6G). Base stations 104, 118 may comprise, for example, 5^{th} generation access nodes (gNB). Transmission by a base station to UE 102 may be called downlink (DL) transmission. Transmission by a UE to a base station may be called uplink (UL) transmission. The UE 102 may be therefore configured to operate as a transmitter for uplink transmissions and as a receiver for downlink transmissions. Base station(s) 104, 118 may be configured to operate as a receiver for uplink transmissions and as a transmitter for downlink transmissions.

The mobile network 100 may comprise other network device(s), and network function(s), in addition, or alternative to, those illustrated in FIG. 1. A network device may be configured to implement functionality of one or more network functions, or to manage one or more network functions. In one example, the mobile network may comprise a spectrum controller. A spectrum controller may be a centralized controller configured to perform tasks for protecting certain operations or services in their respective bands while maximizing the use of spectrum for other lower priority services. The mobile network 100 may further comprise, for example, a RAN intelligence controller (RIC) configured to maintain RAN optimization and efficiency by maintaining one or more 5G network functions, like high-bandwidth and prioritized communications. The RIC may be composed of a non-real time (non-RT) RIC and/or near-real time (near-RT) RIC and host applications, such as xApp and rApp, to optimize operational and radio spectrum efficiency. Even though some embodiments have been described in the context of 5G, it is appreciated that embodiments of the present disclosure are not limited to this example network. Example embodiments may be therefore applied in any present or future communication networks.

In general, a base station may be configured to communicate with one or more UEs via one or more cells. A cell may be configured to serve UEs at a certain geographical area, or a serving area, at a certain radio frequency, or, a range of radio frequencies around a centre frequency of the cell. The serving area may be also referred to as a coverage area. Alternatively, a coverage area may refer to a fraction of the serving area where communication with some required quality is possible. The quality of communication may be measured using key performance indicators, KPIs. A KPI refers to a measurable value that displays how effectively a network is serving a user. For example, the mobile network 100 may comprise coverage areas 108, 110, 112, 114, wherein at each coverage area one or more UEs 102 are served by one or more base stations 104. The coverages areas 108, 110, 112, 114 may be also employed for different network slices. The coverage areas 108, 110, 112, 114 may belong to the same operator or to different operators managing the base stations 104.

In some scenarios, such as when there are higher priority operations that share spectrum with mobile networks, such as the mobile network 100, protection from interference caused by mobile network transmissions to the higher priority operations may be needed. The higher priority operations may refer to incumbent services or other operations provided by, for example, department of defence radars, microwave links, satellites, airborne missions, or the like. For example, there may be a certain operational area 116 of a device 112, within which operational area 116 interference caused by other devices (e.g., the base stations 104) needs to be controlled. The operational area 116 may be also referred to as a protection area or a protection region. The device 112 may be, e.g., a radar, a satellite, or any other device or a system providing the service that is desired or required to be protected from disturbances caused by wireless communication of near-by network devices.

In the example scenario illustrated in FIG.1, the mobile network 100 may comprise one or more base stations 104 located within an area 106 having a certain radius of the centre of the operational area 116 and interfering with operation of the device 112. The mobile network 100 may further comprise one or more base stations 118 that are located further away from the operational area to be protected, e.g., outside the area 106, and may not cause interference due to the distance. The size of the radius, the coverage areas and the operational area may be case specific, and their characteristics may change from time to time depending on the associated devices and their operation.

One approach to protect the higher priority operations from interference rely on managing the aggregate interference generated by mobile networks within the operational area of the higher priority operations is through power reduction. In the approach, focus is on using legacy transmission designs for mobile networks while reducing transmit power to ensure that the received power at the operational area of a device/system providing the operations to be protected remains within acceptable levels.

However, the approach based on power reduction can lead to significant performance degradation for mobile networks, particularly in areas with high protection requirements against interference. This is because when transmit power limits are reduced, also the coverage and data rates achievable by the mobile networks may be reduced.

Furthermore, the advent of 5G and beyond technologies has introduced massive multiple-input multiple output (MIMO) system, where the base stations employ a large number of antenna elements. In these systems, beamforming techniques, in addition to power control, play a crucial role in shaping the signal transmission and mitigating interference. However, current beamforming techniques do not address the challenge of protecting incumbent systems from interference in shared spectrum scenarios.

In some cases, the incumbent services may not be always operating in the same band as the mobile networks, but when they do, the incumbent services may need to be protected as per regulatory established requirements. These dynamic changes in availability of shared bands can diminish the value of the shared spectrum. To maximize the value of the shared spectrum from communication efficiency perspective, methods to handle changes in the allowed operation of mobile network while minimizing the impact to end user are needed. This may be achieved, for example, by maximizing the spectral availability over geographical areas.

An objective is to provide beamforming techniques that may effectively and adaptively control the level of interference experienced by devices and systems providing service to be protected. This may enable coexistence of mobile networks and higher priority operations, such as the incumbent services, without compromising the performance of either.

Example embodiments described herein provide data-driven transmit beamforming methods that enable to design a precoder for a cellular base station such that the desired KPIs for the mobile network is maximized while respecting an interference limit constraint set for the operational area of devices that need to be protected from the interference. Instead of only reducing the transmission power in order to meet interference compliance, the data-driven beamforming methods described herein enable to re-design codebook for beamforming. In an embodiment, different coverage areas, such as the coverage area 108, 110, 112 and/or 114, may have different priorities from a network point of view. In this case, restrictions on transmit power for the base station(s) 104 associated with higher priority coverage areas may be configured to be minimized by the designed precoder compared to the lower priority coverage areas.

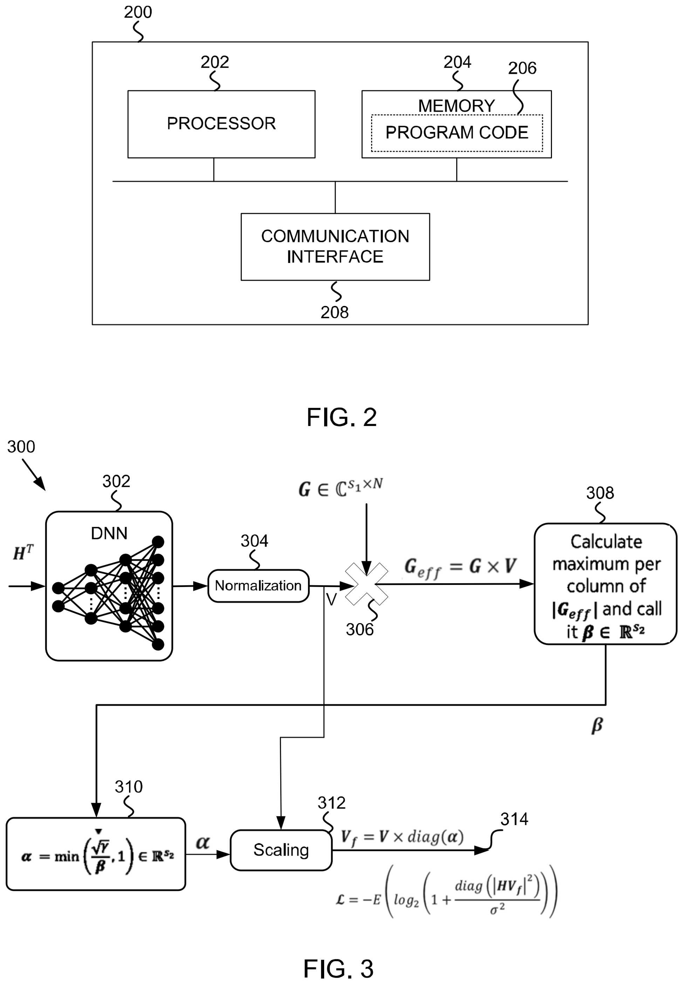

FIG. 2 illustrates an example of an apparatus configured to practice one or more example embodiments. The apparatus 200 may comprise a device such as base station 104, an access point, an access node, a radio network node, or a split portion thereof (e.g., a central or distributed unit of a base station), a network device, a control device or in general any apparatus configured to implement functionality described herein.

The apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 200 may further comprise at least one memory 204. The memory 204 may be configured to store, for example, computer program code or the like, for example operating system software and application software. The at least one memory 204 may comprise one or more volatile memory devices, one or more non-volatile memory devices, and/or a combination thereof. For example, the memory 104 may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). The at least one memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

The apparatus 200 may further comprise a communication interface 208 configured to enable the apparatus 200 to transmit and/or receive information. The communication interface 208 may comprise an external communication interface, such as for example a radio interface between UE(s) 102 and base station(s) 104, or a communication interface between a central unit and distributed unit(s) of base station (e.g., an Fs-U and/or Fs-C interface). The communication interface 208 may comprise one or more radio transmitters or receivers, which may be coupled to one or more antennas or the apparatus 200, or be configured to be coupled to one or more antennas external to the apparatus 200.

The apparatus 200 may further comprise other components and/or functions such as a user interface (not shown) comprising at least one input device and/or at least one output device. The input device may take various forms such a keyboard, a touch screen, or one or more embedded control buttons. The output device may for example comprise a display, a speaker, or the like. In one example, the user interface may provide means for receiving at least one of a neural network or parameters to be used by the apparatus 200 to determine at least one parameter for beamforming.

When the apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, the apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of the apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

The apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause the apparatus 200 to perform the method(s). In general, computer program instructions may be executed on means providing generic processing functions. Such means may be embedded for example in a control device, a network device, or the like. The method(s) may be thus computer-implemented, for example, based on algorithm(s) executable by the generic processing functions, an example of which is the at least one processor 202. The means may comprise transmission or reception means, for example one or more radio transmitters or receivers, which may be coupled or be configured to be coupled to one or more antennas. The apparatus 200 may comprise, for example, a network device, for example, an access node, an access point, a base station, or a central/distributed unit thereof. Although the apparatus 200 is illustrated as a single device, it is appreciated that, wherever applicable, functions of the apparatus 200 may be distributed to a plurality of devices.

FIG. 3 illustrates an example of a method 300 for designing a codebook-free beamforming technique for spectrum sharing according to an example embodiment. The method 300 may be performed by a network device. In one example, the network device may comprise a control device, such as a spectrum controller. In one example, the functions depicted in FIG. 3 may be performed by RAN or one or more core network elements. For example, the functions may be configured to be performed by a gNB or a RIC, such as the non-RT RIC or the near-RT RIC. With the method 300, the control device may determine an optimal codebook or beamformer for a base station or a set of base stations. In one example, the network device may comprise a base station.

Considering a single cell scenario, a base station with N antennas (e.g., the base station 104 of mobile network 100) may be configured to serve a single-antenna user (e.g., UE 102) while controlling interference caused by the base station to an operational area of one or more other devices to be protected. The network device may know channel state information (CSI) of the UE 102 $h ∈ {ℂ}^{N \times 1}$*.* In general, the network device may obtain a data set channel samples associated with the user device. The data set may be based on, for example, at least one of UE radio measurements, UE CSI feedback, network estimated propagation results per point in a three-dimensional grid with 1m resolution, or any other suitable data. The network device may further have access to a relatively large data set of channel samples (e.g., a data set of hundreds or thousands of samples) from the operational area to be protected from interference. In one example, the channel samples may be obtained based on a channel model assumption. For example, the network device may be configured to perform channel model estimation, and determine the set of channel samples based on the estimated channel model associated with the operational area. Alternatively, the channel samples may be obtained from a historical data set of the channel samples. Alternatively, the channel samples may be obtained from real-time measurements. The real-time measurements may be performed, for example, by the one or more devices to be protected, one or more sensors configured for the measurements, or the like. In general, the data set of channel samples may be received by the network device from one or more devices associated with the operational area, or the network device may determine said data set based on data received from the one or more devices. The amount of obtained data samples may vary for different clutter areas, such as for urban, suburban and rural areas and by UE and base station heights and incumbent characteristic (e.g., height of the respective device, antenna type, waveform type).

Assuming data rate maximization as a desired KPI, the problem of interest is to find a precoder $v ∈ {ℂ}^{N \times 1}$ such that: $\begin{matrix}{max}_{v} {log}_{2} 1 + {\left‖{h}^{H}v\right‖}^{2} / {σ}^{2} \\ s . t {\left‖{g}_{i}^{H}v\right‖}^{2} \leq τ ∀ i \\ {\left‖v\right‖}^{2} \leq P ,\end{matrix}$ wherein the first line of (1) aims to the data rate maximization in serving area of the base station, the second line represents interference compliance in the operational area to be protected and the third line represents a precoder power constraint. Further, $H ∈ {ℂ}^{{s}_{2} \times N}$ represents the channel of the served UE 102, wherein s₂ is a number of channel samples of the UE 102, *σ*² represents noise variance and *τ* interference constraint. The interference constraint is associated with the operational area. The interference constraint may be obtained by the network device, for example, from the one or more devices to be protected from the interference, an operator of the one or more devices, or the interference constraint may be pre-set at the network device. $G ∈ {ℂ}^{{s}_{1} \times N}$ represents the channel samples of the operational area, wherein s₁ is the number of the channel samples.

In case of a codebook-free precoding, the designed precoder for the base station may be configured to satisfy one or more power constraints, such as a maximum transmit power constraint. For this case, a neural architecture is configured to take the channel ***H*** of the user (e.g., UE 102) served by the mobile network as well as the set of channel samples from the operational area(s) (e.g., ***G***) as the input, and generate a precoder that optimize an utility function (e.g., a KPI such as data rate) of the mobile network user while respecting the interference constraint(s) for all channel samples in ***G**.* The overall architecture of the neural network is illustrated in FIG. 3.

In the first stage of the method 300, a deep neural network (DNN) followed by a normalization layer may be used to generate, at operation 302, a precoder **V** based on the channel of the user of the mobile network. Here, the normalization layer enforces the maximum transmit power constraint at operation 304. In the second stage of the method 300, the transmit power of the precoder **V** is scaled down, at operation 312, to ensure that for any channel samples of the operational area the interference constraint is satisfied. The final resultant precoder output by the neural network is called ***V**_{f}*( ${V}_{f} ∈ {ℂ}^{N \times {s}_{2}}$).

For example, a cross product of the precoder **V** and the channel samples ***G*** (***G**_{eff}* = ***G*** × ***V***) may be used at operation 306 to calculate a maximum per column of |***G**_{eff}*| to produce $β ∈ {ℝ}^{{s}_{2}}$, at operation 308. The resulting ***β*** may be then used, at operation 310, to determine a scalar function $α = min \left(\frac{\sqrt{γ}}{β}, 1\right) ∈ {ℝ}^{{s}_{2}}$, wherein *γ* corresponds to the set interference constraint. The scaling operation at 312 may be performed using the determined scalar function to output the final precoder ***V_{f}** = **V*** × *diag*(***α***).

For training such a neural architecture, a training loss function may be determined to maximize the one or more KPIs associated with the serving area of mobile network. For example, the training loss function can be set as a negative sign of the desired KPI for the mobile network. The desired KPI may be related to at least one of data rate, SNR, coverage area, spectral efficiency, geographical availability, or any other KPI for mobile networks. The coverage area related KPI may be estimated, e.g., based on reference-signal-received-power, RSRP. The geographical availability refers to a percentage value of the coverage.

As an example, the neural network can be set to seek to maximize the average data rate for the user, $L = - E \left({log}_{2}\left(1+\frac{diag \left({\left|H{V}_{f}\right|}^{2}\right)}{{σ}^{2}}\right)\right)$, as shown in FIG. 3. During training, the method 300 may comprise determining, based on the output ***V_{f}*** of the neural network, updated parameters for the precoder ***V*** to minimize the loss function defined to maximize the at least one key performance indicator for the channel samples of the user device. At operation 314, the updated parameters may be fed to the neural network to train the neural network, e.g., to adjust weight of the DNN.

In case the network device performing the method 300 is a spectrum controller, the network device may be configured to transmit the final precoder to the base station serving the UE 102 to be used for beamforming. In case the network device is a base station, the base station may be configured to perform transmissions to the UE 102 using the determined final precoder. The illustrated method is also applicable to scenarios where one or more base stations are serving one or more user devices.

To reduce the computational/hardware complexity and/or communication overhead, codebook-based precoding methods may be preferred. In codebook-based precoding, the precoder direction is selected from a set of predetermined set of codewords comprised in the codebook.

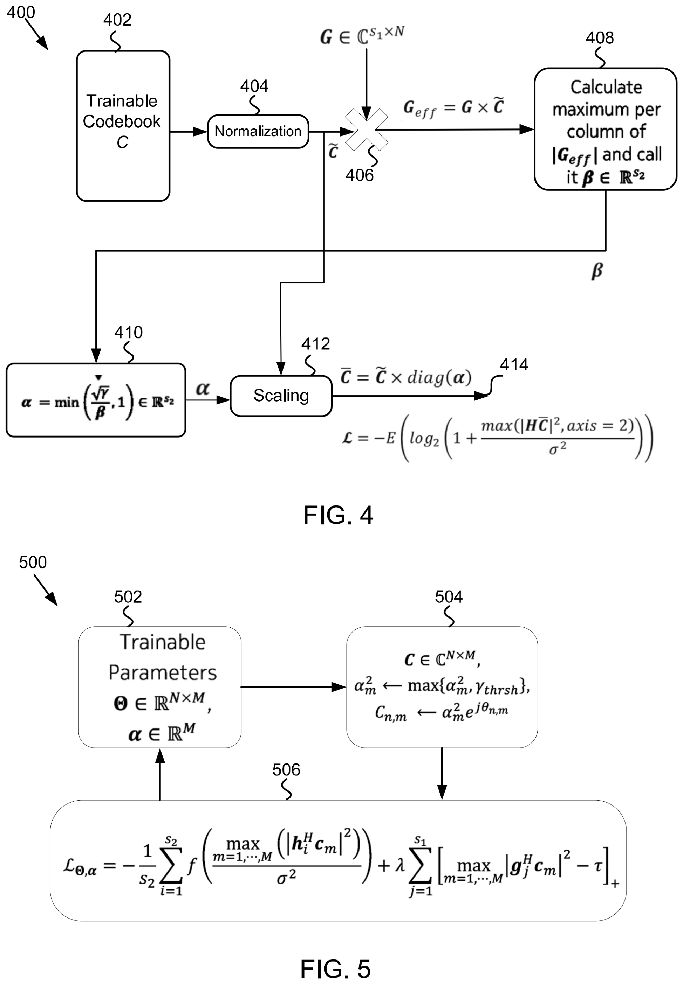

FIG. 4 illustrates an example of a method 400 for designing a codebook-based beamforming for spectrum sharing according to an example embodiment. The method 400 may be performed by a network device. In one example, the network device may comprise a control device, such as a spectrum controller. In one example, the functions depicted in FIG. 4 may be performed by RAN or one or more core network elements. For example, the functions may be configured to be performed by a gNB or a RIC, such as the non-RT RIC or the near-RT RIC. With the method 400, the control device may determine an optimal codebook or beamformer for a base station or a set of base stations. In one example, the network device may comprise a base station.

For a given codebook, first a method to find the optimal precoder that satisfies the interference constraint is provided. Suppose without considering the interference constraints in the operational area, that a codebook 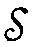 *=* {***c**ⱼ*} is used where each codeword ***c**ⱼ* satisfies the maximum transmit power constraint. Now with an interference constraint *τ*, each codeword transmit power (by a scalar denoted by ${α}_{j}^{2}$) may need to be scaled-down to make sure that interference in all operational area is below the respective threshold. As a result, the new codebook will be: = {*αⱼ**c**ⱼ*} where ${α}_{j} = \sqrt{τ} / {max}_{i} \left‖{g}_{i}^{H}{c}_{j}\right‖$. Finally, the optimal precoder is selected to maximize the desired KPI for the mobile network user. For example, the data rate maximization may be performed as: ${max}_{w ∈ {S}^{˜}} {log}_{2} \left(1+\frac{{\left‖{h}^{H}w\right‖}^{2}}{{σ}^{2}}\right)$. The aforementioned steps may be included into a neural network architecture configured to define the codebook as a trainable parameter, as illustrated in FIG. 4.

For example, at operation 402, the neural network may be configured to create a codebook ***C*** for beamforming. The neural network may obtain an initial codebook as an input. The codebook ***C*** may be input, at operation 404, to a normalization layer configured to ensure that the codebook satisfies the maximum transmit power constraint. Thereafter, a cross function may be performed at operation 406 for the codebook satisfying the maximum transmit constraint, ***C̃***, and the channel samples ***G*** to obtain ***G**_{eff}* = ***G*** × ***C̃***. At operation 408, a maximum per column of |***G**_{eff}*| may be calculated to produce $β ∈ {ℝ}^{{s}_{2}}$. Based on ***β***, a scalar function is formed at operation 410, $α = min \left(\frac{\sqrt{γ}}{β}, 1\right) ∈ {ℝ}^{{s}_{2}}$, wherein *γ* corresponds to the interference constraint *τ.* The scalar function ***α*** is then used for scaling down, at operation 412, the codewords powers of the codebook ***C̃***, ***C̅*** = ***C̃*** × *diag*(***α***). The resulting codebook $\overline{C} ∈ {ℂ}^{N \times M}$ output by the neural network, at operation 414, may be then provided for one or more base stations for beamforming.

Training of the neural network may be performed similar as described in FIG. 3. Here, the codebook is a trainable parameter of the neural network and the training loss function may be defined to maximize the desired KPI for an optimal codeword. For example, the loss function may be defined to maximize the average data rate as follows: $L = - E \left({log}_{2}\left(1+\frac{max \left({\left|H \overline{C}\right|}^{2},axis=2\right)}{{σ}^{2}}\right)\right)$. The output codebook *C̅* may be used to solve the loss function, and the parameters of the neural network may be adjusted to minimize the loss function.

FIG. 5 illustrates another example of a method 500 for designing a codebook-based beamforming for spectrum sharing according to an example embodiment. The method 500 may be performed by a network device. In one example, the network device may comprise a control device, such as a spectrum controller. In one example, the functions depicted in FIG. 5 may be performed by RAN or one or more core network elements. For example, the functions may be configured to be performed by a gNB or a RIC, such as the non-RT RIC or the near-RT RIC. With the method 500, the control device may determine an optimal codebook or beamformer for a base station or a set of base stations. In one example, the network device may comprise a base station. The method 500 may be performed by the network device with a neural network trained to output at least one parameter for beamforming.

At operation 502, the network device may obtain parameters for a codebook. The parameters may comprise, for example, a first trainable parameter $Θ ∈ {ℝ}^{N \times M}$ with its (*n, m*)*^{th}* entry denoted by *θ_{n,m}.* **Θ** may be a matrix representing a direction of a beamformer. The parameters may further comprise a second trainable parameter, such as $α ∈ {ℝ}^{M}$ with its *m^{th}* entry denoted by *αₘ*. The second trainable parameter ***α*** may represent a vector defining scaling for each column of the codebook. The parameters may be standalone parameters, or obtained based on an output of the neural network. The network device further obtains a data set of channel samples associated with one or more user devices served by the one or more base stations and a data set of channel samples associated with an operational area of one or more devices providing service to be protected from interference caused by the one or more base stations. In addition, the network device knows an interference constraint defined for the operational area. The network device may input the parameters to the neural network, wherein the neural network, at operation 504, creates and outputs the codebook based on the input parameters. The codebook may be represented by a matrix C of size *N* × *M* with its (*n, m*)*^{th}* entry denoted by *c*_{*n*,*m*} (*C*_{*n*,*m*} ← *αₘ*²*e^{jθ_{n,m}}, αₘ*² ← *max*{*αₘ*²*, γₜₕᵣₛₕ*}) and *m^{th}* column denoted by ***c**ₘ*. Each column of the codebook may be a precoder.

At operation 506, the network device may determine updated parameters for the created codebook to minimize a loss function. The loss function may be defined to maximize at least one KPI for the channel samples associated with the one or more user devices while the interference constraint is met for the channel samples associated with the operational area.

For example, the loss function may be defined as: ${L}_{Θ , α} = - \frac{1}{{s}_{2}} {\sum }_{i = 1}^{{s}_{2}} f \left(\frac{{max}_{m = 1 , ⋯ , M} \left({\left|{h}_{i}^{H}{c}_{m}\right|}^{2}\right)}{{σ}^{2}}\right) + λ {\sum }_{j = 1}^{{s}_{1}} {\left[{max}_{m = 1 , ⋯ , M}{\left|{g}_{j}^{H}{c}_{m}\right|}^{2}-τ\right]}_{+}$ where *λ* is taken to be a large positive number. Further, [*x*]₊ denotes max(x, 0). The first term of the loss function is based on the channel samples associated with the one or more user devices. The second term of the loss function is based on the channel samples associated with the operational area. In the loss function, *f*(*x*) can be any concave function like log(x) in which case the KPI maximization is the geometric mean of SNRs. Alternatively, *f*(*x*) could be log₂(1 + x) in which case, the KPI maximization is the average data rate maximization, or log log₂(1 + x) in which case the KPI maximization is the geographical mean rate maximization. The network device may be configured to train the neural network based on the updated parameters to minimize 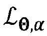 w. r. t. **Θ**, ***α*** until a stopping criterion is met. For example, the training may be stopped once the neural network model performance stops improving, e.g., when the result of the loss function starts increasing. It is noted, that similar stopping criterion can be used in training the neural networks of methods 300 and 400, that is, the respective neural networks are trained until it is determined that the result of the loss function is minimized, e.g. based on a detection that the result starts increasing. Based on the final codebook after training, the network device may determine at least one beamforming parameter to be used by the at least one base station. For example, the network device may provide the final codebook, or the optimal codebook parameters, to be used by the at least one base station for beamforming. In addition, the network device may be configured to distribute the trained neural network for one or more base stations. In one example, training of the neural network used in the method 300, 400 and/or 500 may be performed externally from the mobile network based on data received from the mobile network.

In addition to a maximum transmit power constraint for the precoder, a minimum transmit power constraint may also be set. To address the minimum transmit power constraint, a beam (e.g., a codeword) may be instructed to be switched off when the transmit power of that beam is below the threshold corresponding to the minimum transmit power constraint. For example, in the codebook-based precoding method 500, once the stopping criterion for training is reached, if ${α}_{m}^{2} < {γ}_{thrsh} , ∀ m$*,* which corresponds to a minimum power threshold for the base station, then, it is assumed that that beam needs to be turned off. If the powers for all beams (e.g., codewords) in the codebook are below the threshold, the respective cell may need to be switched off because of the unacceptable interference power in the operational area for any codeword in the codebook. The minimum transmit power criterion for turning off one or more beams may be also applied in the method 300 and method 400.

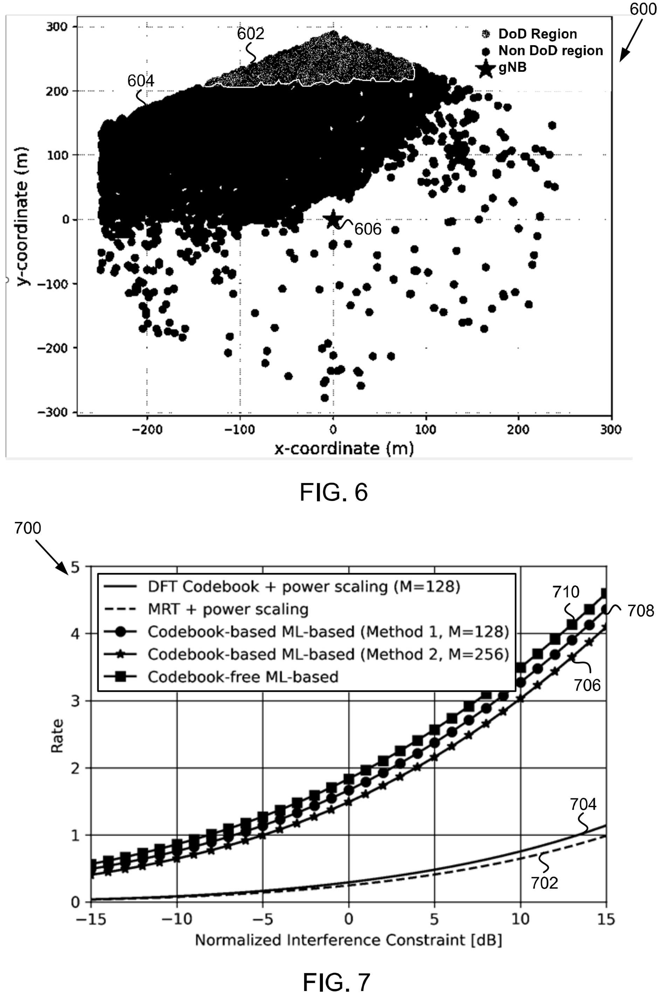

FIG. 6 illustrates an example simulation setup for spectrum sharing. In the graph 600 of FIG. 6, points in the area 602 indicate the locations of the channel samples associated with the operational area (e.g., a department of defence (DoD) region) and points in the area 604 indicate the locations of the channel samples associated with the user devices that will be served by the mobile network, e.g. gNB 606. The example simulation setup is based on 3063 training channel samples and 2041 test channel samples for the used neural networks.

Performance of the methods 300, 400, 500 described herein are compared to two baseline methods, maximum ratio transmission (MRT) with power scaling and discrete fourier transform (DFT) with power scaling. MRT is known to be an optimal codebook-free beamformer for a single layer transmission under total power constraint. To further make MRT compliant with the interference constraints, the power is scaled down. A DFT codebook is a widely used codebook for MIMO beamforming. To further make the DFT codebook compliant with the interference constraints, the power of each codeword of the codebook is properly scaled down.

FIG. 7 illustrates an example of performance of different beamforming techniques for spectrum sharing based on the simulation setup of FIG. 6. In FIG. 7, the codebook size for codebook-based beamforming methods is M =128 or 256. The graph 700 illustrates data rate performance of the different methods with respect to normalized interference constraints. In the graph 700, curve 702 illustrates performance of the MRT method with power scaling applied, curve 702 illustrates performance of the DFT codebook with power scaling, curve 706 illustrates performance of the codebook-based method 500, curve 708 illustrates performance of the codebook-based method 400 and curve 710 illustrates performance of the codebook-free method 300. It can be observed that the proposed methods (both codebook-free method 300 and codebook-based methods 400, 500) achieve significantly better performance compared to their conventional counterparts MRT and DFT. This demonstrates that the proposed data-driven methods 300, 400, 500 are an effective way to enable spectrum sharing through beamforming designs specifically tailored for spectrum sharing, rather than relying solely on power reduction.

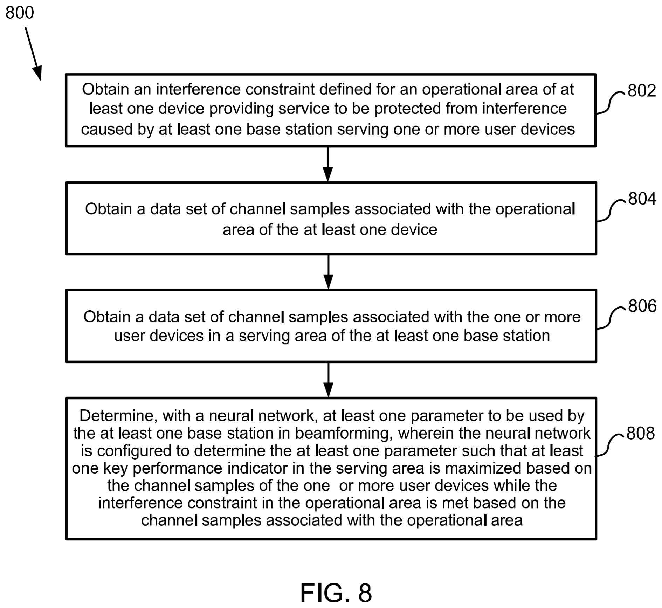

FIG. 8 illustrates an example of a method 800 for designing beamforming according to an example embodiment. The method 800 may be performed by a network device, or by a control device configured to control the functioning thereof, when installed therein. In one example, the network device may be a base station. In one example, the network device may be an entity, such as a spectrum controller, configured to provide beamforming instructions for one or more base stations.

At operation 802, the method may comprise obtaining an interference constraint defined for an operational area of at least one device providing service to be protected from interference caused by at least one base station serving one or more user devices. For example, the interference constraint may be received from the at least one device. The at least one device may be configured to provide, for example, some incumbent service or any communication service considered to be prioritized.

At operation 804, the method may comprise obtaining a data set of channel samples associated with the operational area of the at least one device. For example, the network device may receive channel samples determined based on at least one of channel estimation, historical data sets or real-time measurements. The channel samples may be received from the at least one device, or some other device configured to perform said channel estimations, gathering of historical data sets or real-time measurements.

At operation 806, the method may comprise obtaining a data set of channel samples associated with the one or more user devices in a serving area of the at least one base station. For example, the channel samples may be obtained by the network device based on CSI data received from the at least one user device.

At operation 808, the method may comprise determining, with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area. The at least one parameter may be, for example, a precoder, a codebook, a codeword of a codebook, or any indication of a precoder to be used. The neural network may be based on, for example, any of the architectures and/or training presented in FIG. 3, FIG. 4 or FIG. 5.

The design of the precoders, as described in FIG. 3, FIG. 4 and/or FIG. 5, can be performed, for example, by the base station or by a central spectrum sharing entity. An example of a central spectrum sharing entity is a spectrum sharing system (SAS). The design of the precoders may be also performed by an entity closer to the RAN such as a proxy or an open radio access network (O-RAN) Real Time RIC.

In an embodiment, when the precoder is designed by the base station, a network entity (e.g., a spectrum controller, SAS, proxy or RIC) may be configured to send an indication of the interference constraint of the incumbent device to the base station. The base station may be configured to determine two codebooks, one for control and another for data, based on the training datasets of the neural network used for designing the codebook(s) and the received interference constraint. Thereafter, the base station may be configured to employ the determined codebook(s). In an embodiment, the base station may use a codebook-free precoder designed using the training datasets and the interference constraint, e.g., as described in FIG. 3.

In an embodiment, the precoder codebook may be determined by the network entity. For example, a base station may provide to the network entity at least one of an indication of capability to support codebook-free and/or codebook-based precoding, a maximum transmit power per beam, a minimum transmit power per beam, granularity with which power a beam can be configured (e.g., in steps of 0.1 dB) or an indication of preferred codebooks (in case codebook-based precoding is supported by the base station). The network entity may employ an algorithm to determine the allowed beam configurations that maximize performance, coverage or another determined criterion (e.g., one or more KPIs). The network entity may provide the base station, or a plurality of base stations, one or more sets of beams configurations to be employed. For example, a different beam set for synchronization signal block (SSB) vs physical downlink shared channel (PDSCH) beams may be provided by the network entity. This may account for the periodicity of the SSB beams and their interference over a period of time being relatively small. The base station(s) may switch between different sets of beam configurations provided by the network entity based on, for example, incumbent activity in its geographical area (e.g., the operational area to be protected from interference).

The above steps described for base stations may be also applied to e.g. a high-power UE. For these types of UE (e.g., customer premises equipment (CPE) used in fixed wireless access deployments) the uplink side may employ beamformed transmissions and these transmissions may need to be controlled by the network entity to ensure protection of the incumbent services/devices.

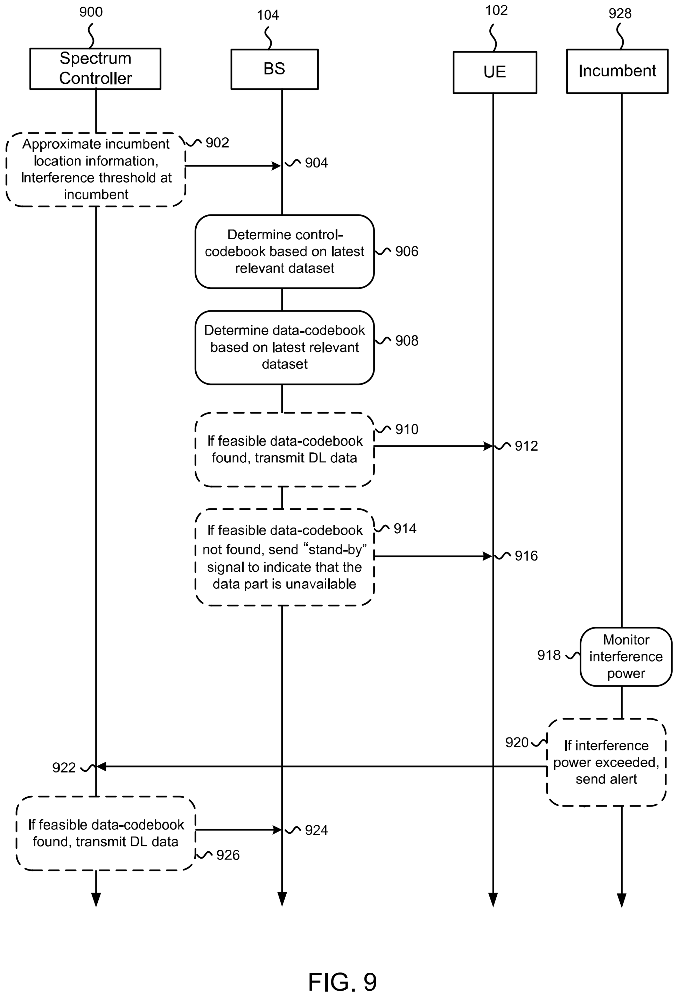

FIG. 9 illustrates an example of signaling for spectrum sharing using a data-driven beamforming technique according example embodiments. The signaling may be performed, for example, between a spectrum controller 900 and a base station, such as the base station 104, in the case where the precoder codebook is determined at the base station.

At operation 902, the spectrum controller 900 may identify an approximate location of an incumbent 928 (e.g., device 112) and an interference constraint associated with the incumbent 928, or the operational area of the incumbent.

At 904, the spectrum controller 900 may be configured to transmit the information obtained at operation 902 to the base station 104. In some embodiments, the spectrum controller 900 may have a finite set of geographical locations that the incumbent 928 is expected to operate in. In this case, the spectrum controller 900 may be configured to indicate to the base station 104 which of the locations the incumbent 928 is operating in. Based on this information, the base station 104 may be configured to execute a precoding codebook calculation (e.g., as described in FIG. 4 or FIG. 5). Here, the base station 104 may be configured to calculate separate codebooks for control and data transmissions, at operations 906 and 908, respectively. The codebooks may be calculated based on latest relevant datasets obtained by the base station 104.

At operation 910, the base station 104 may determine that a feasible data codebook is found at the operation 908. Thereafter, the base station 104 may be configured to use the determined data codebook for DL transmission to the UE 102, or to a plurality of UEs, at operation 912.

Alternatively, at operation 914, the base station 104 may determine that such a feasible data-codebook is not found. Thereafter, the base station 104 may be configured to send, at operation 916, a stand-by signal to the served UE(s) 102. The stand-by signal indicates to the UEs that the data part is temporarily unavailable due to incumbent activity and spectrum sharing.

For example, the base station 104 may determine that the feasible data-codebook is not found based on that the interference protection criterion for the incumbent cannot be met with any codebook. For example, if the base station 104 is too close to the incumbent 928, the base station 104 would have to transmit at very low powers which may be below the minimum power the radio unit can transmit at. In one example, the KPI set for the optimization may not be able to be achieved by a cell or a base station within a cluster. Since the optimization may be for a cluster of base stations, some of the base stations or cells which do not meet the KPI criterion could be configured to not transmit and interference margin in other base stations within the cluster may be leveraged for transmission.

When the base station 104 actively transmits data to the served UE(s) 102 on the DL, the incumbent 928 may monitor the interference power. If the incumbent detects that the interference power is exceeded, at operation 918, the incumbent 928 may transmit, at operation 920, an alert to the spectrum controller 900. In response to the received alert, the spectrum controller 900 may be configured to request the base station to perform a power back-off. The spectrum controller 900 may further freshly acquire CSI in order to retrain the neural network(s) used to determine the codebooks. In addition, or alternatively, the incumbent 928 may alert directly the base station 104 about the exceeded interference power. The base station 104 may then determine to retrain the used neural network(s). The neural network(s) may be trained by the spectrum controller or the base station, or both. When the neural network(s) is trained by the spectrum controller, the spectrum controller may be configured to transmit the retrained neural network to the base station.

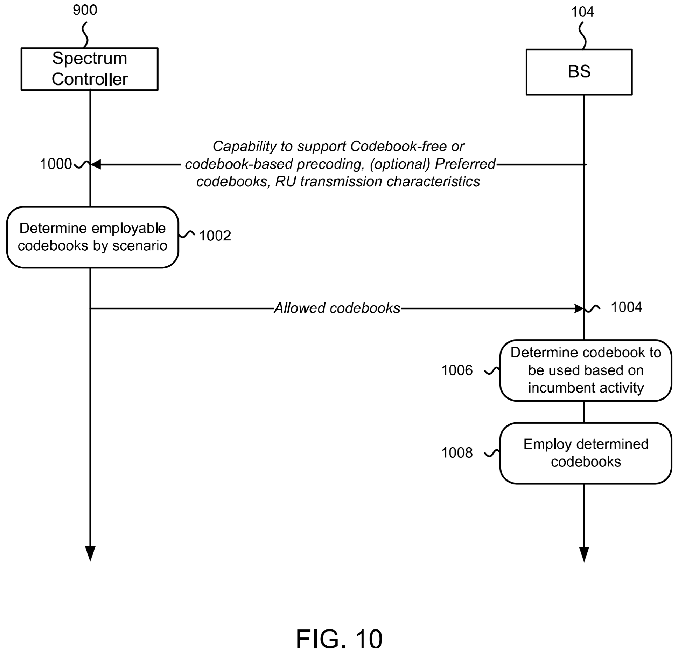

FIG. 10 illustrates an example of signaling for spectrum sharing when spectrum controller determines codebooks to be used by a base station, such as base station 104, according to an example embodiment.

At operation 1000, the base station 104 may be configured to provide the spectrum controller 900 with information regarding codebook capabilities (e.g., codebook-free and/or codebook-based precoding) and radio unit (RU) capabilities of the base station, including e.g. preferred codebooks and maximum and minimum power per beam supported. This information could be provided by the base station 104, e.g., during a registration procedure with the spectrum controller 900. The spectrum controller 900 may determine, at operation 1002, the allowed codebooks for the base station 104 (or a set of base stations) such that the incumbent protection criteria are met, and that some performance objective is maximized (e.g., based on the interference constraint and one or more KPIs to be maximized). Since an interference profile (frequency, power, and resources used for transmission) from broadcast or control channels, such as the SSB, can be different from those used for DL data traffic delivery, the spectrum controller may determine a first codebook to be used for control channels such as physical downlink control channel, PDCCH, and SSB and a second codebook to be used for the PDSCH.

At operation 1004, the spectrum controller 900 may inform the base station 104 of the allowed codebook sets. In some embodiments, the spectrum controller 900 may send the entire codebooks via backhaul in case the codebooks were freshly computed by the spectrum controller. Alternatively, the spectrum controller 900 may transmit a codebook index to the base station 104 that indicates which of the available codebooks from an existing set of codebooks are to be used by the base station 104. Some codebook sets may be mandated for use under certain conditions, such as incumbent activity detection, to guarantee the protection of incumbent operations. The detection of incumbent activity can be performed, for example, at the base station 104, by an external sensor or be provided to the base station 104 via the spectrum controller 900. The base station 104 may be configured to determine, at operation 1006, the set of codebooks to be employed based on e.g. whether incumbent activity is ongoing. The base station 104 may then employ, at operation 1008, the determined codebooks, for example, until there is a change in events detected. In some scenarios the base station 104 may be configured to inform the spectrum controller 900 of the codebooks it is actively using.

Further features of the methods 300, 400, 500, 800 directly result for example from functionality of UE 102, a network device such as the spectrum controller 900 or base station 104, as described throughout the description, claims, and drawings, and are therefore not repeated here. An apparatus, for example a device such as UE 102, or base station 104, may be configured to perform or cause performance of any aspect of the method(s) described herein. Further, a computer program, a computer program product, or a (non-transitory) computer-readable medium may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A network device, comprising means for:
obtaining an interference constraint defined for an operational area of at least one device providing service to be protected from interference caused by at least one base station serving one or more user devices;
obtaining a data set of channel samples associated with the operational area of the at least one device;
obtaining a data set of channel samples associated with the one or more user devices in a serving area of the at least one base station;
determining, with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area.

2. The network device of claim 1, wherein the network device is a controller
for spectrum sharing, and the network device further comprises means for:
transmitting the at least one parameter to the at least one base station for the beamforming.

3. The network device of claim 1, wherein the network device comprises
one of the at least one base station, and the network device further comprises means for:
performing transmissions towards the one or more user devices served by the respective base station using the determined at least one parameter for beamforming.

4. The network device of any preceding claim, wherein the at least one parameter comprises at least one of a precoder or a beamforming codebook.

5. The network device of any preceding claim, wherein the data set of the channel samples associated with the operational area is obtained based on at least one of: channel model estimation, a historical data set or real-time measurements.

6. The network device of any preceding claim, wherein the network device further comprises means for:
generating, by the neural network based on the channel samples associated with the one or more user devices, a precoder;
inputting the precoder to a normalization layer of the neural network configured to adjust the precoder to meet a maximum transmit power constraint;
performing, by the neural network based on the channel samples associated with the operational area, a scaling operation for the precoder, wherein precoder power is scaled down such that the interference constraint is met for the channel samples associated with the operational area;
outputting, by the neural network, the precoder after the scaling operation; and
determining the at least one parameter for beamforming based on the output.

7. The network device of claim 6, wherein the network device further comprises means for:
determining, based on the output of the neural network, updated parameters for the precoder to minimize a loss function defined to maximize the at least one key performance indicator for the channel samples of the one or more user devices; and
training the neural network based on the updated parameters.

8. The network device of any of claims 1 to 5, wherein the network device further comprises means for:
obtaining, by the neural network, a codebook for beamforming;
inputting the codebook to a normalization layer of the neural network configured to adjust the codebook to meet a maximum transmit power constraint;
performing, by the neural network based on the channel samples associated with the operational area, a scaling operation for the codebook, wherein codeword powers are scaled down such that the interference constraint is met for the channel samples associated with the operational area;
outputting, by the neural network, the codebook with the scaled power;
selecting, based on the output codebook and the channel samples associated with the user device, an optimal codeword that maximizes the at least one key performance indicator; and
determining the at least one beamforming parameter based on the optimal codeword.

9. The network device of claim 8, wherein the network device further comprises means for:
determining, based on the output of the neural network, updated parameters for the codebook to minimize a loss function defined to maximize the at least one key performance indicator for the channel samples of the one or more user devices; and
training the neural network based on the updated parameters.

10. The network device of any of claims 1 to 5, wherein the network device further comprises means for:
obtaining parameters for a codebook;
inputting the parameters to the neural network configured to output the codebook created based on the parameters;
determining, based on the obtained data sets, updated parameters for the created codebook to minimize a loss function defined to maximize the at least one key performance indicator for the channel samples associated with the one or more user devices while the interference constraint is met for the channel samples associated with the operational area;
training the neural network based on the updated parameters until a stopping criterion is met; and
determining the at least one beamforming parameter based on the final codebook after training.

11. The network device of claim 10, wherein the parameters trained based on the loss function comprise at least one of a matrix defining a direction of the beamforming or a vector defining scaling for each column of the codebook.

12. The network device of any preceding claim, wherein the at least one key performance indicator comprises at least one of a data rate, a coverage, a spectral efficiency, geographical availability or a signal-to-noise-ratio; and
wherein the operational area is associated with at least one of microwave links, satellites, radars, or airborne missions to be protected from interference.

13. The network device of any preceding, wherein the network device further comprises means for:
obtaining a minimum power constraint;
determining that transmit power of at least beam associated with the at least one beamforming parameter is below the minimum power constraint;
instructing the at least one base station to turn off the at least one beam;
determining, based on the at least one parameter to be used in beamforming, separate codebooks for control and data transmission.

14. The network device of cany preceding claim, wherein the network device further comprises means for:
determining, based on the at least one parameter to be used in beamforming, that a feasible codebook for data transmission is not available; and
transmitting, to the one or more user devices, a stand-by signal indicative that a data part of transmissions is temporary unavailable.

15. A method, comprising:
obtaining, by a network device, an interference constraint defined for an operational area of at least one device providing service to be protected from interference caused by at least one base station serving one or more user devices;
obtaining, by the network device, a data set of channel samples associated with the operational area of the at least one device;
obtaining, by the network device, a data set of channel samples associated with the one or more user devices in a serving area of the at least one base station;
determining, by the network device with a neural network, at least one parameter to be used by the at least one base station in beamforming, wherein the neural network is configured to determine the at least one parameter such that at least one key performance indicator in the serving area is maximized based on the channel samples of the one or more user devices while the interference constraint in the operational area is met based on the channel samples associated with the operational area.
